# EUROPEAN PATENT APPLICATION

(11) **EP 3 543 097 A1**
(43) Date of publication of application: **25.09.2019**
(21) Application number: 18172635.7
(22) Date of filing: 16.05.2018
(51) Int. Cl.: B62J 1/06

(54) **LIGHT-WEIGHT AND HIGH-ELASTIC VIBRATION ABSORPTION ASSEMBLY FOR BIKE SADDLE**

(30) Priority: 21.03.2018 TW 107203624 U
(71) Applicant: DDK Group Co., Ltd. Taiwan Branch, 40757 Taichung City (TW)
(72) Inventor: SUNG, Ying-Chiao, 40757 TAICHUNG CITY (TW)
(74) Representative: Karakatsanis, Georgios

(57) **Abstract**

A lightweight and high-elastic vibration absorption assembly for a bike saddle (1) includes a pair of vibration-absorption blocks (4) mounted to a bottom(12) of a saddle. The vibration-absorption blocks are each formed with a central hole (41) extending in a vertical direction between a top surface and a bottom surface thereof. A fastening member (5) is received through a through hole (31) of a support base (3) and a central hole of each of the vibration-absorption blocks to be fixed to an underside positioning hole (15) of the saddle. The vibration-absorption blocks are each formed of a plurality of foamed units (42) that are bonded to each other with a bonding portion therebetween. Each of the foamed units includes a plurality of foaming pores (43) formed therein. The vibration-absorption blocks are permitted to be temporarily deformed when receiving a pressing force (P) acting on the saddle so that the pressing force is absorbed by the vibration-absorption blocks.

## Description

### BACKGROUND OF THE INVENTION

### 1. Field of the Invention

The present invention relates to a design of a shock-absorbing structure of a seat, and in particular to a lightweight and high-elastic vibration absorption assembly for a bike saddle.

### 2. The Related Arts

Bicycles are now very popular. All kinds of accessory have been available and widely used and have been made more professional. In a conventional structural design of a bicycle cushion, in order to allow a rider not to take excessive shocks in riding a bicycle, a pair of helical springs is often provided on the underside of the saddle to serve as primary shock-absorbing parts. Such a design, however, makes the assembly operation difficult and requiring a large amount of human labor. In an actual use, such helical springs may, when acted upon by an external force and stretched, would exhibit an enlarged spacing distance between adjacent turns of the helical spring, making it potentially risky for people to have their fingers pinched and hurt. Further, such helical springs are exposed to the outside environment and may easily get dusts attached thereto.

To improve such problems of the traditionally used helical springs, manufacturers proposed installation of vibration-absorption blocks that are made of rubbers or plastics on the underside of the saddle to function as shock-absorbing parts. This, although easing an operation of assembly and overcoming the issues of finger being potentially pinched and hurt, does not provide an effect of vibration absorption as desired.

Further, the vibration-absorption blocks that are traditionally used are generally heavy and are generally not suitable for a lightweight product of bicycle cushion.

### SUMMARY OF THE INVENTION

In view of the deficiencies of the known shock-absorbing structures of bicycle saddles, the primary objective of the present invention is to provide a lightweight and high-elastic vibration absorption assembly for a bike saddle, which provides a cyclist with a better vibration absorption effect and a lightweight product of bicycle saddle.

To achieve the above objective, the present invention provides a structure that comprises a pair of vibration-absorption blocks mounted to a bottom of a saddle. The vibration-absorption blocks are each formed with a central hole extending in a vertical direction between a top surface and a bottom surface thereof. A fastening member is received through a through hole of a support base and a central hole of each of the vibration-absorption blocks to be fixed to an underside positioning hole of the saddle. The vibration-absorption blocks are each formed of a plurality of foamed units that are bonded to each other with a bonding portion therebetween. Each of the foamed units includes a plurality of foaming pores formed therein.

The efficacy is that the present invention provides a lightweight and high-elastic vibration absorption assembly for a bike saddle, wherein when a pressing force is acting on the saddle, the vibration-absorption blocks undergo temporary deformation due to the pressing force so that the pressing force is absorbed by the vibration-absorption blocks to thereby improve comfort of riding bicycle for a rider. Further, if desired, the vibration-absorption blocks of the present invention may be coupled with an additional accessary component, such as an externally-mounted enclosure barrel and an internally-mounted spring, in order to provide desired properties.

Further, in respect of mounting assembly, the vibration-absorption blocks can be made in the form of a combined, unitary assembly so as to make the mounting operation thereof extremely easy.

The technical solution adopted in the present invention will be further explained with reference to embodiments of which details are provided below with reference to the attached drawings.

### BRIEF DESCRIPTION OF THE DRAWINGS

The present invention will be apparent to those skilled in the art by reading the following description of preferred embodiments of the present invention, with reference to the attached drawings, in which:
FIG. 1 is a perspective view, taken from a rear side, showing a first embodiment of the present invention;
FIG. 2 is a perspective view, taken from a bottom side, showing the first embodiment of the present invention;
FIG. 3 is an exploded view, taken from the bottom side, showing the first embodiment of the present invention;
FIG. 4 is a cross-sectional view of the first embodiment of the present invention, illustrating a vibration-absorption block coupled between a saddle and a support base;
FIG. 5 is a schematic view, in an enlarged form, illustrating the vibration-absorption block of the present invention, in which a plurality of foamed units bonded together with a bonding portion present between every two adjacent ones of the foamed unit to form the vibration-absorption block;
FIG. 6 is a side elevational view illustrating the vibration-absorption block of the present invention that is mounted to a bicycle saddle first to be then attached to an upright tube;
FIG. 7 is a cross-sectional view showing a second embodiment of the present invention;
FIG. 8 is a cross-sectional view showing a third embodiment of the present invention;
FIG. 9 is a cross-sectional view showing a fourth embodiment of the present invention; and
FIG. 10 is a cross-sectional view showing a fifth embodiment of the present invention.

### DETAILED DESCRIPTION OF THE PREFERRED EMBODIMENTS

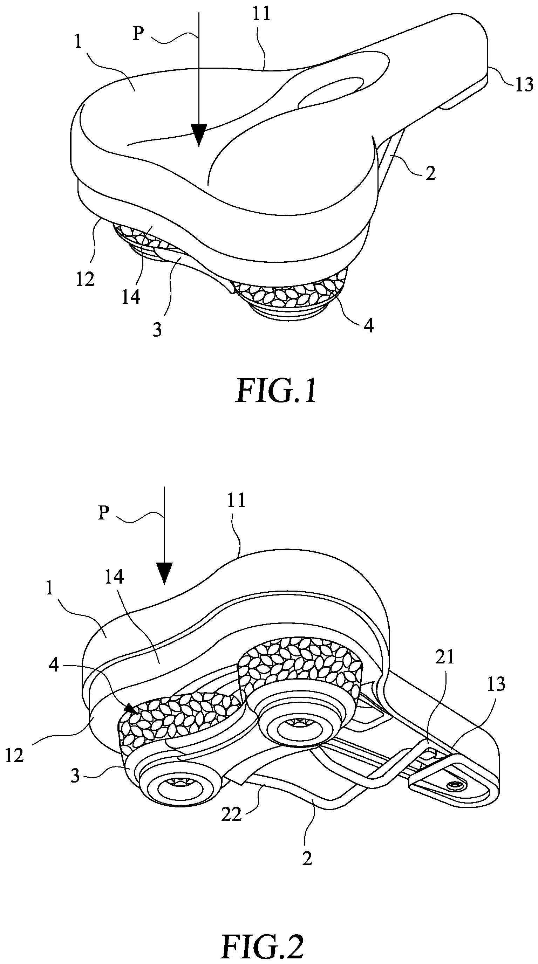

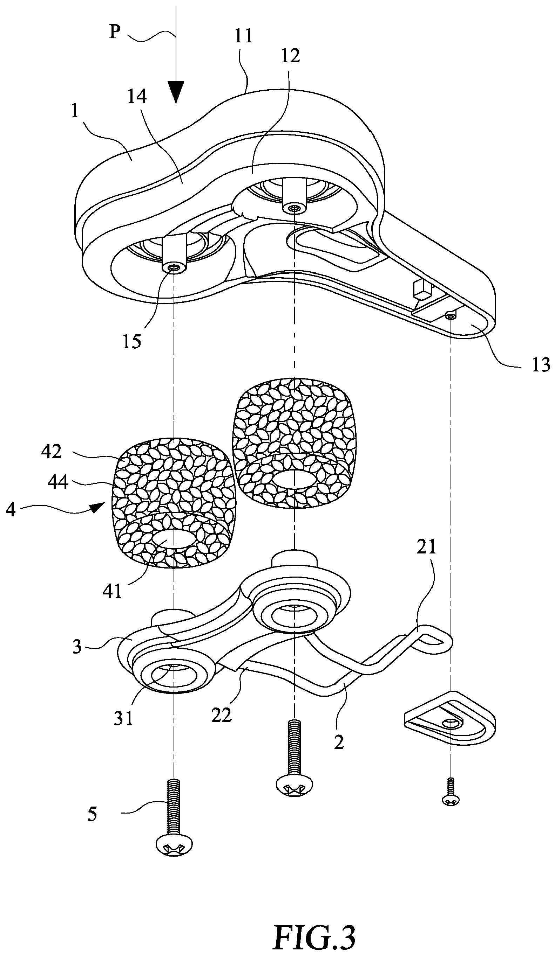

FIGS. 1-3 are respectively a perspective view taken from a rear side, a perspective view taken from a bottom side, and an exploded view taken from the bottom side, illustrating a first embodiment of the present invention. As shown in the drawings, a saddle 1 comprises a sitting surface 11 and a bottom surface 12. A bracket 2 has a front end 21 coupled to a bottom front end 13 of the saddle 1; and the bracket 2 has a rear end 22 coupled to a support base 3. A pair of vibration-absorption blocks 4 is coupled between the support base 3 and a bottom rear end 14 of the saddle 1.

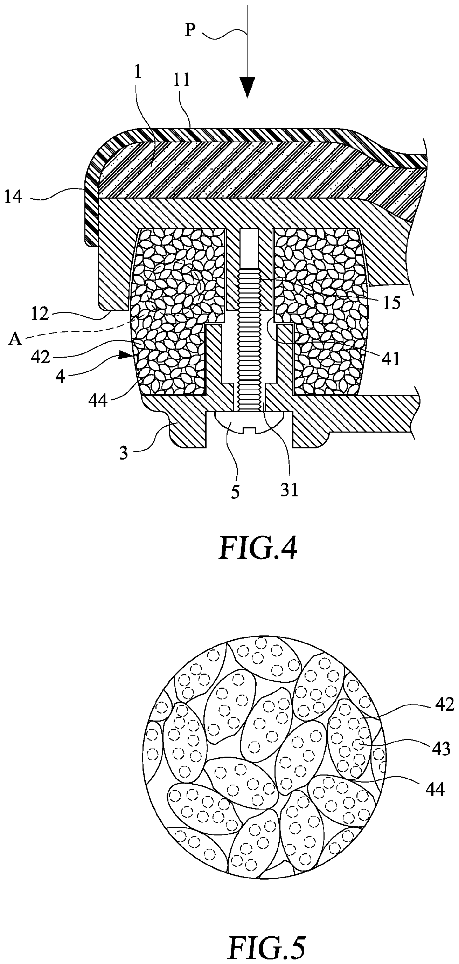

FIG. 4 is a cross-sectional view of the first embodiment of the present invention, illustrating the vibration-absorption blocks 4 coupled between the saddle 1 and the support base 3. The vibration-absorption blocks 4 each have a top surface abutting a bottom of the saddle 1 and the vibration-absorption blocks 4 each have a bottom surface positioned on and supported by the support base 3. The vibration-absorption blocks 4 are each formed with a central hole 41 extending in a vertical direction between the top surface and the bottom surface thereof.

FIG. 5 illustrates the vibration-absorption block 4 of the present invention is formed of a plurality of foamed units 42 that are bonded together by a bonding portion 44 present between every two adjacent ones of the foamed units 42 to form the vibration-absorption block 4.

In the instant embodiment, the vibration-absorption block 4 is formed of a plurality of foamed units 42 that are arranged adjacent to and bonded with each other to form a solid form of vibration-absorption block 4. Each of the foamed units 42 comprises, formed in an interior thereof, with a plurality of foaming pores 43. In actual fabrication, fabrication of the foamed unit 42 can be done with for example foaming of a thermoplastic polyurethane polymer material so as to form, in the interior of the foamed unit 42, a plurality of foaming pores 43, thereby providing a unitary particle having a light weight and a property of high elasticity. Then, a suitable adhesive material is used to adhesively bond a number of the foamed units 42 together or heat is applied to melt surfaces of the foamed units 42 to have the adjacent ones of the foamed units 42 bonded to each other through the bonding portions 44 therebetween and shaped to form a desired configuration of the block to thereby provide the vibration-absorption block 4.

To mount the vibration-absorption block 4 to the saddle 1, the bracket 2, and the support base 3, a fastening member 5 is received through a through hole 31 of the support base 3 and a central hole 41 of the vibration-absorption block 4 to thereby fix to an underside positioning hole 15 of the saddle 1 thereby securely position the vibration-absorption block 4 between the support base 3 and the bottom of the saddle 1.

Since the vibration-absorption block 4 is formed of a plurality of foamed units 42 and since each of the foamed units 42 is formed, in the interior thereof, with a plurality of foaming pores 43, when the sitting surface 11 of the saddle 1 receives a pressing force P acting thereon in the vertical direction, the top surface and the bottom surface of the vibration-absorption block 4 are acted upon by the pressing force P and thus compressed and undergoing temporary deformation to allow the vibration-absorption block 4 to absorb the pressing force P. The pressing force P is removed, the vibration-absorption block 4 restores back to the original configuration.

In addition to the pressing force P acting on the saddle 1 in the vertical direction, there may be a pushing force in a direction other than the vertical direction. Since in this invention, the fastening member 5 is received through the through hole 31 of the support base 3 and the central hole 41 of the vibration-absorption blocks 4 to get fixed to the underside positioning hole 15 of the saddle 1, it is possible to constrain the pushing force acting in a non-vertical direction by the fastening member 5. Further, in case the pressing force P acting in the vertical direction to the vibration-absorption block 4 is excessively large, since the fastening member 5 is received, in a movable manner, through the through hole31 of the support base 3, the fastening member 5 of which a top end is fixed to the underside positioning hole 15 of the saddle 1 to serve as a fixed supporting point is allowed to have a bottom end thereof to move upward or downward according to the magnitude of the pressing force.

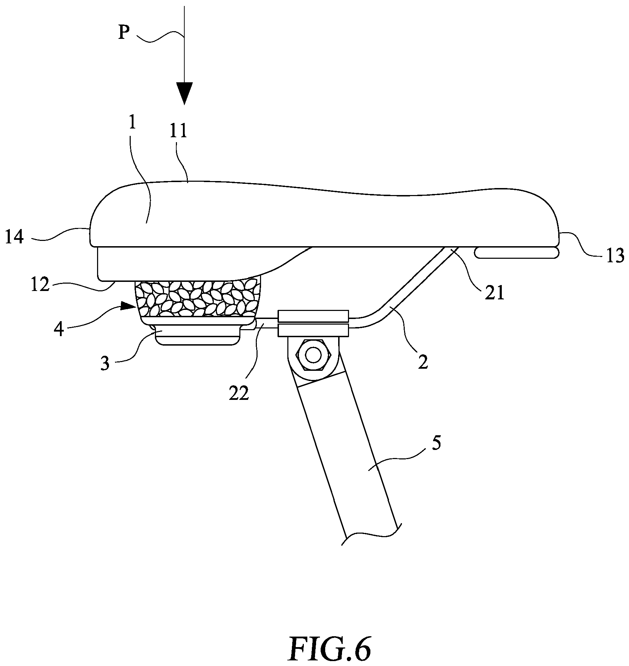

FIG. 6 is a side elevational view illustrating the vibration-absorption block 4 according to a first embodiment of the present invention that is mounted to a saddle 1 of a bicycle first to be then attached to an upright tube. The saddle shock-absorbing structure of the present invention is also applicable to other fields (such as motorcycles, electric bicycles, electric vehicles, and automobile seats).

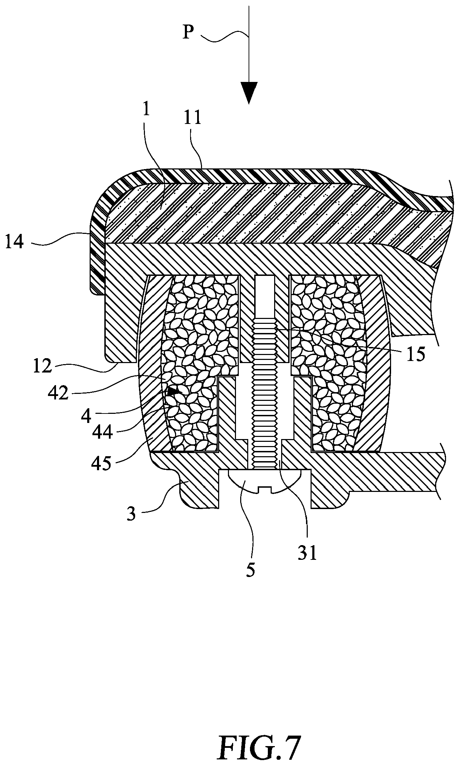

FIG. 7 is a cross-sectional view showing a second embodiment of the present invention. The instant embodiment is substantially identical, in structure, to the first embodiment and thus, similar parts are designated with the same reference numerals for correspondence. In the instant embodiment, the vibration-absorption block 4 is coupled, around an outer circumference thereof, with an enclosure barrel 45, which serves as a protection layer of the vibration-absorption block 4 and functions as an assistive shock-absorbing member. The enclosure barrel 45 can be integrally formed of a rubber or plastic material as a unitary structure.

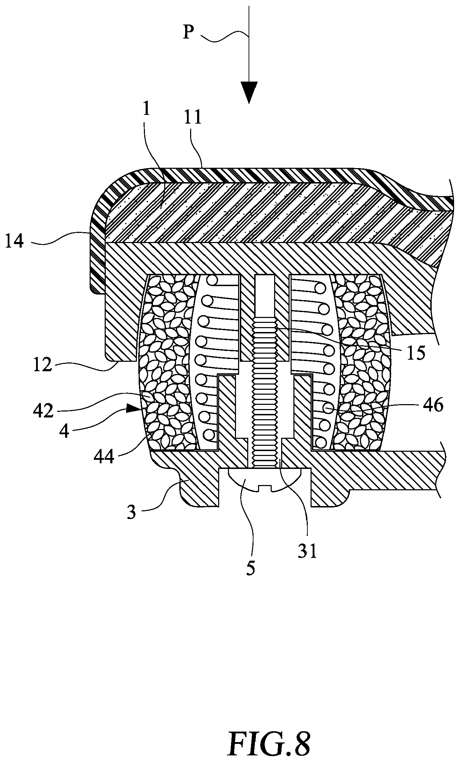

FIG. 8 is a cross-sectional view showing a third embodiment of the present invention. In the instant embodiment, the vibration-absorption block 4 is combined with an internally-mounted spring 46 that is arranged in an interior space thereof to function as an assistive shock-absorbing member of the vibration-absorption block 4. The internally-mounted spring 46 can be a helical spring.

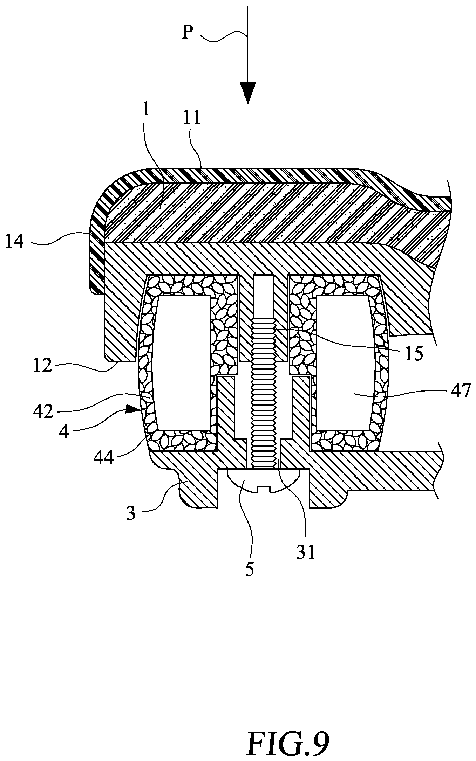

FIG. 9 is a cross-sectional view showing a fourth embodiment of the present invention. Opposite to the solid vibration-absorption block 4 of the first embodiment, in the instant embodiment, the vibration-absorption block 4 has an interior space that is formed as an enclosed hollow air chamber 47. The hollow air chamber 47 provides the vibration-absorption block 4 with a property of being even lighter in weight and different elasticity, but surely falling within the scope of the present invention.

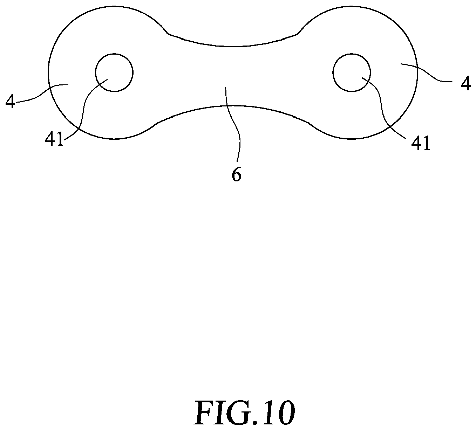

FIG. 10 is a cross-sectional view showing a fifth embodiment of the present invention. In the instant embodiment, a coupling portion 6 is provided between the two vibration-absorption blocks 4 to connect the two vibration-absorption blocks 4 to each other to thereby form a combined, unitary vibration-absorption block assembly in order to simply a subsequent mounting operation thereof. Further, the two separate vibration-absorption blocks or the combined, unitary vibration-absorption block assembly may be, as an optional alternative, directly formed on the support base 3 to facilitate a subsequent mounting operation.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A lightweight and high-elastic vibration absorption assembly for a bike saddle having a sitting surface and a bottom surface, the saddle being provided with a bracket having a front end coupled to a bottom front end of the saddle and a rear end coupled to a support base, a pair of vibration-absorption blocks being mounted between the support base and a bottom rear end of the saddle, **characterized in that**:
each of the vibration-absorption blocks has a top surface supporting a bottom of the saddle and a bottom surface positioned on and supported by the support base;
the vibration-absorption blocks are each formed with a central hole extending in a vertical direction between the top surface and the bottom surface of the vibration-absorption block;
a fastening member is received through a through hole of the support base and the central hole of each of the vibration-absorption blocks to be fixed to an underside positioning hole of the saddle so as to securely position the vibration-absorption block between the support base and the bottom of the saddle; and
the vibration-absorption blocks are each formed of a plurality of foamed units that are bonded to each other with a bonding portion therebetween, each of the foamed units comprising a plurality of foaming pores formed therein.

2. The lightweight and high-elastic vibration absorption assembly according to Claim **1,** wherein the vibration-absorption blocks are each coupled with an enclosure barrel arranged around an outer circumference thereof.

3. The lightweight and high-elastic vibration absorption assembly according to Claim **2,** wherein the enclosure barrel is formed of one of a rubber material and a plastic material.

4. The lightweight and high-elastic vibration absorption assembly according to Claim **1,** wherein the vibration-absorption blocks are each combined with an internally-mounted spring arranged in an interior space thereof.

5. The lightweight and high-elastic vibration absorption assembly according to Claim **4,** wherein the internally-mounted spring comprises a helical spring.

6. The lightweight and high-elastic vibration absorption assembly for a bike saddle according to Claim **1,** wherein the vibration-absorption blocks are each formed therein with an enclosed hollow air chamber.

7. The lightweight and high-elastic vibration absorption assembly for a bike saddle according to Claim **1,** wherein the two vibration-absorption blocks are connected via a coupling portion that couples the two vibration-absorption blocks to each other.
